# EUROPEAN PATENT APPLICATION

(11) **EP 4 654 500 A1**
(43) Date of publication of application: **26.11.2025**
(21) Application number: 23924005.4
(22) Date of filing: 21.02.2023
(51) Int. Cl.: H04L 1/00

(54) **OPTICAL TRANSMISSION DEVICE, OPTICAL RECEPTION DEVICE, OPTICAL TRANSMISSION SYSTEM, AND OPTICAL TRANSMISSION METHOD**

(71) Applicant: Mitsubishi Electric Corporation, Tokyo 100-8310 (JP)
(72) Inventor: NAKAMURA, Takahiko, Tokyo 100-8310 (JP); YOSHIDA, Hideo, Tokyo 100-8310 (JP)
(74) Representative: Plasseraud IP
(86) International application number: PCT/JP2023/006228
(87) International publication number: WO 2024/176351

(57) **Abstract**

An optical transmission apparatus for transmitting a multilevel-modulated optical transmission signal, the optical transmission apparatus including: a control encoding unit (27) that outputs a control information sequence having been encoded, by performing error correction encoding processing on control information, the control information including information on a multilevel modulation scheme to be used for a main signal information sequence; a main encoding unit (25) that generates the main signal information sequence having been encoded, by performing error correction encoding processing on main signal information, the error correction encoding processing corresponding to the multilevel modulation scheme indicated by the control information; a selection circuit (28) that outputs the main signal information sequence after inserting the control information sequence into the main signal information sequence such that the control information sequence indicates the multilevel modulation scheme to be used for the immediately following main signal information sequence; and a mapping unit (29) that generates the multilevel-modulated optical transmission signal by performing mapping processing on the control information sequence by use of a predetermined multilevel modulation scheme, the control information sequence having been output by the selection circuit (28), and performing mapping processing on the main signal information sequence by use of the multilevel modulation scheme indicated by the control information sequence, the main signal information sequence having been output by the selection circuit (28).

## Description

### Field

The present disclosure relates to an optical transmission apparatus, an optical reception apparatus, an optical transmission system, and an optical transmission method for transmitting a multilevel-modulated optical transmission signal.

### Background

In a conventional optical transmission system, an error correction code is used to achieve high transmission capacity and long-distance transmission. In an optical transmission system that transmits a multilevel-modulated optical transmission signal, an error correction code is used which corresponds to a multilevel modulation scheme to be used. For example, Patent Literature 1 discloses an error correction encoding apparatus compatible with a multilevel modulation scheme.

### Citation List

### Patent Literature

Patent Literature 1: WO 2021/199690 A

### Summary

### Technical Problem

However, the conventional technique described above is based on the assumption that a single predetermined multilevel modulation scheme is used. Accordingly, a single code format has been determined for error correction. Therefore, in a case where data shorter than the code format are input, a fixed value is inserted into an information bit sequence to match a data length with the code format. Thus, the conventional technique described above has a problem in that transmission efficiency is lowered.

The present disclosure has been made in view of the above, and an object of the present disclosure is to obtain an optical transmission apparatus capable of improving transmission efficiency.

### Solution to Problem

In order to solve the above-described problems and achieve the object, an optical transmission apparatus according to the present disclosure is an optical transmission apparatus for transmitting a multilevel-modulated optical transmission signal. The optical transmission apparatus includes: a control encoding unit to output a control information sequence having been encoded, by performing error correction encoding processing on control information, the control information including information on a multilevel modulation scheme to be used for a main signal information sequence; a main encoding unit to generate the main signal information sequence having been encoded, by performing error correction encoding processing on main signal information, the error correction encoding processing corresponding to the multilevel modulation scheme indicated by the control information; a selection circuit to output the main signal information sequence after inserting the control information sequence into the main signal information sequence such that the control information sequence indicates the multilevel modulation scheme to be used for the immediately following main signal information sequence; and a mapping unit to generate the multilevel-modulated optical transmission signal by performing mapping processing on the control information sequence by use of a predetermined multilevel modulation scheme, the control information sequence having been output by the selection circuit, and performing mapping processing on the main signal information sequence by use of the multilevel modulation scheme indicated by the control information sequence, the main signal information sequence having been output by the selection circuit.

### Advantageous Effects of Invention

The optical transmission apparatus according to the present disclosure has the effect of enabling transmission efficiency to be improved.

### Brief Description of Drawings

FIG. 1 is a diagram illustrating a configuration of an optical transmission system according to a first embodiment.
FIG. 2 is a diagram illustrating an exemplary configuration of an optical transmission apparatus illustrated in FIG. 1.
FIG. 3 is a diagram illustrating a detailed exemplary configuration of an encoding circuit illustrated in FIG. 2.
FIG. 4 is a flowchart for describing operation of the optical transmission apparatus illustrated in FIG. 2.
FIG. 5 is a diagram illustrating a configuration of a decoding circuit included in an optical reception apparatus illustrated in FIG. 1.
FIG. 6 is a flowchart for describing operation of the optical reception apparatus illustrated in FIG. 1.
FIG. 7 is a diagram illustrating dedicated hardware for implementing functions of the optical transmission apparatus and the optical reception apparatus illustrated in FIG. 1.
FIG. 8 is a diagram illustrating a configuration of a control circuit for implementing the functions of the optical transmission apparatus and the optical reception apparatus illustrated in FIG. 1.
FIG. 9 is a diagram illustrating a frame format of 256 quadrature amplitude modulation (QAM).
FIG. 10 is a diagram illustrating a frame format of 64QAM.
FIG. 11 is a diagram illustrating a frame format of 16QAM.
FIG. 12 is a diagram illustrating a frame format of QPSK.

### Description of Embodiments

Hereinafter, an optical transmission apparatus, an optical reception apparatus, an optical transmission system, and an optical transmission method according to an embodiment of the present disclosure will be described in detail with reference to the drawings.

### First Embodiment.

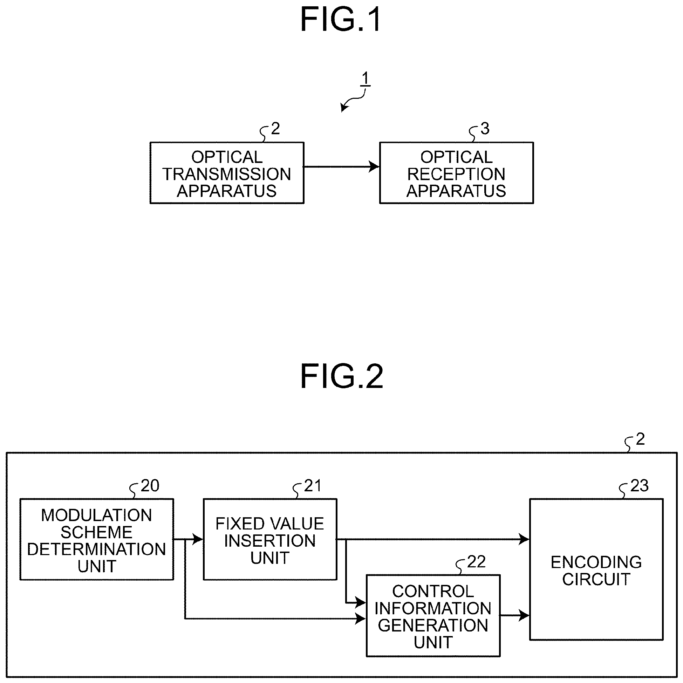

FIG. 1 is a diagram illustrating a configuration of an optical transmission system 1 according to a first embodiment. The optical transmission system 1 includes an optical transmission apparatus 2 and an optical reception apparatus 3. The optical transmission apparatus 2 and the optical reception apparatus 3 are connected by an optical fiber or the like. The optical transmission system 1 transmits a multilevel-modulated optical transmission signal. The optical transmission apparatus 2 generates a multilevel-modulated optical transmission signal, and transmits the generated optical transmission signal. The optical reception apparatus 3 receives the optical transmission signal transmitted by the optical transmission apparatus 2.

The optical transmission apparatus 2 can perform multilevel modulation processing corresponding to multiple types of multilevel modulation scheme. The optical transmission apparatus 2 can select and use a multilevel modulation scheme with good transmission efficiency in accordance with the length of an information bit sequence to be transmitted. The optical reception apparatus 3 needs to perform reception processing in accordance with the modulation scheme used for an optical transmission signal to be received. Therefore, the optical transmission apparatus 2 has a function of transmitting a control signal for notifying the optical reception apparatus 3 of the used modulation scheme to the optical reception apparatus 3 before transmitting a main signal including an information bit sequence to be transmitted. Hereinafter, a specific configuration and operation will be described.

FIG. 2 is a diagram illustrating an exemplary configuration of the optical transmission apparatus 2 illustrated in FIG. 1. The optical transmission apparatus 2 includes a modulation scheme determination unit 20, a fixed value insertion unit 21, a control information generation unit 22, and an encoding circuit 23. Note that the optical transmission apparatus 2 may include constituent elements other than those illustrated in FIG. 2.

The modulation scheme determination unit 20 determines a multilevel modulation scheme to be used for main signal information including an information bit sequence to be transmitted, on the basis of the length of the information bit sequence. The modulation scheme determination unit 20 selects a multilevel modulation scheme in such a way as to improve transmission efficiency. The modulation scheme determination unit 20 outputs, to the fixed value insertion unit 21, the information bit sequence to be transmitted, and outputs the determined multilevel modulation scheme to each of the fixed value insertion unit 21 and the control information generation unit 22.

The fixed value insertion unit 21 generates main signal information, which is an information bit sequence corresponding to a maximum multilevel symbol, by inserting a fixed value at a position of a bit not to be transmitted, according to the multilevel modulation scheme determined by the modulation scheme determination unit 20, and outputs the main signal information to each of the control information generation unit 22 and the encoding circuit 23.

The control information generation unit 22 generates control information including information indicating the multilevel modulation scheme determined by the modulation scheme determination unit 20, and outputs the generated control information to the encoding circuit 23. Note that the control information may include frame information on main signal information subjected to processing by the fixed value insertion unit 21. The frame information includes, for example, information on a length of an information bit sequence to be transmitted, the information bit sequence being included in the main signal information.

The encoding circuit 23 performs error correction encoding processing on the main signal information and the control information, and performs modulation processing. Hereinafter, a specific configuration will be described.

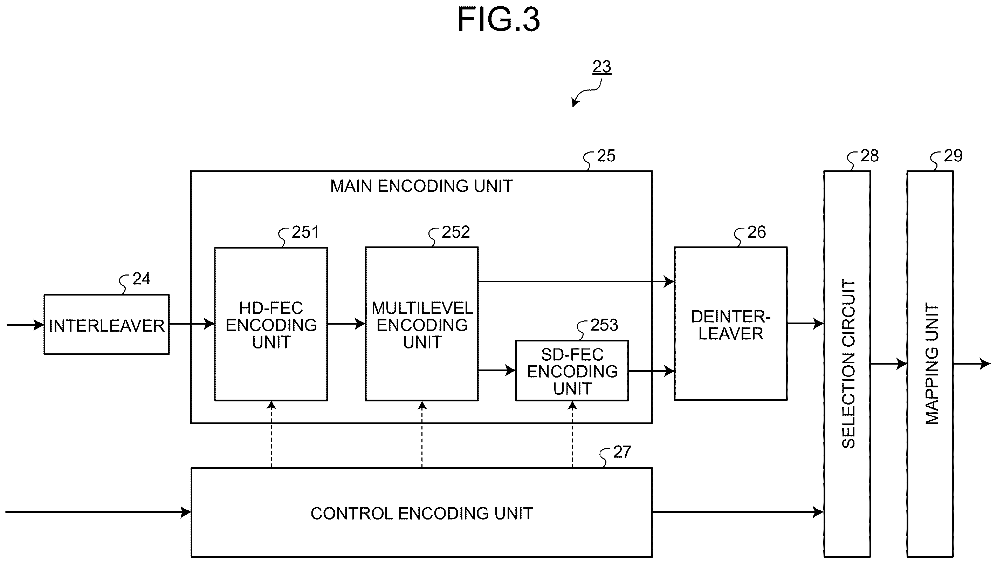

FIG. 3 is a diagram illustrating a detailed exemplary configuration of the encoding circuit 23 illustrated in FIG. 2. Main signal information and control information are input to the encoding circuit 23. The control information includes information on a modulation scheme to be used for the main signal information.

The encoding circuit 23 includes an interleaver 24, a main encoding unit 25, a deinterleaver 26, a control encoding unit 27, a selection circuit 28, and a mapping unit 29. The main signal information is input to the interleaver 24, and the control information is input to the control encoding unit 27.

The interleaver 24 rearranges the order of a bit sequence of the main signal information in units of multilevel modulation symbols. The interleaver 24 rearranges the order of the bit sequence of the main signal information in accordance with the processing to be performed in the main encoding unit 25. The interleaver 24 outputs, to the main encoding unit 25, the main signal information in which the bit sequence has been reordered.

The main encoding unit 25 generates an encoded main signal information sequence by performing encoding processing on the main signal information output by the interleaver 24, based on the control information. The main encoding unit 25 includes a hard decision (HD)-forward error correction (FEC) encoding unit 251, a multilevel encoding unit 252, and a soft decision (SD)-FEC encoding unit 253.

On the basis of the frame information included in the control information, the HD-FEC encoding unit 251 performs encoding processing on the main signal information by using an error correction code that assumes that hard-decision decoding is performed on the main signal information when the main signal information is decoded in the optical reception apparatus 3. The encoding processing to be performed by the HD-FEC encoding unit 251 may be referred to as first encoding processing. In the first encoding processing, for example, a Bose Chaudhuri Hocquenghem (BCH) code or a Reed Solomon (RS) code is used to perform encoding processing that assumes a maximum multilevel modulation symbol. That is, the HD-FEC encoding unit 251 also treats symbol bits of rows fixed to 0 as an information sequence, and performs error correction encoding on the symbol bits. The HD-FEC encoding unit 251 outputs a main signal information sequence to the multilevel encoding unit 252. The main signal information sequence is an encoded sequence subjected to the encoding processing.

The multilevel encoding unit 252 divides the main signal information sequence output by the HD-FEC encoding unit 251 in accordance with the multilevel modulation scheme included in the control information, and performs multilevel encoding processing. The multilevel encoding unit 252 outputs, to the SD-FEC encoding unit 253, some of a plurality of bits included in the main signal information sequence subjected to the multilevel encoding processing as bits to be processed by the SD-FEC encoding unit 253, and outputs remaining bits to the deinterleaver 26. A bit to be processed by the SD-FEC encoding unit 253 is preferably a bit having a high error rate. For example, an error rate varies between bits in a multilevel modulation symbol depending on the multilevel modulation scheme. Therefore, any of a plurality of bits in the multilevel modulation symbol with a higher error rate, such as a least significant bit (LSB), can be set as a bit to be processed by the SD-FEC encoding unit 253.

The SD-FEC encoding unit 253 performs encoding processing on the bits output by the multilevel encoding unit 252 by using an error correction code that assumes that soft-decision decoding is performed on the bits when the bits are decoded in the optical reception apparatus 3. The encoding processing to be performed by the SD-FEC encoding unit 253 may be referred to as second encoding processing. For example, a low density parity check (LDPC) code is used in the second encoding processing. The SD-FEC encoding unit 253 outputs an encoded sequence subjected to the encoding processing to the deinterleaver 26.

The deinterleaver 26 rearranges the order of the main signal information sequence output by the main encoding unit 25 such that the order of the main signal information sequence is restored to the original order thereof. That is, the deinterleaver 26 rearranges the order of bits included in the main signal information sequence such that the bits are arranged in the same order as the order in which the bits were arranged before being rearranged by the interleaver 24. The deinterleaver 26 outputs, to the selection circuit 28, the reordered main signal information sequence.

The control encoding unit 27 performs encoding processing on the control information, and outputs a control information sequence subjected to the encoding processing to the selection circuit 28. The control information includes information indicating a multilevel modulation scheme to be used for the main signal information sequence, frame information, and the like. The control encoding unit 27 can hold the information included in the control information, and provide the information to the main encoding unit 25. The control encoding unit 27 can perform error correction coding on the control information by using an error correction code different from the error correction code used for the main signal information. The control encoding unit 27 preferably performs encoding processing by using an error correction code having a higher error correction capability than the error correction code to be used for the main signal information. Examples of the error correction code to be used for the control information include a block code, an LDPC code, and a polar code. Since the control information sequence has a short information bit length, a polar code is suitable. This is because the polar code has high error correction capability even in the case of a short code length, so that a code rate can be flexibly set. The use of the polar code by the control encoding unit 27 can improve decoding performance regarding the decoding of the control information. In addition, since the polar code can reduce processing delay, the time required for the encoding processing of the control information can be shortened. As a result, encoding processing of the control information can be performed in parallel with error correction encoding processing of the main signal information.

The selection circuit 28 selects one of the main signal information sequence output by the deinterleaver 26 and the control information sequence output by the control encoding unit 27, and outputs the selected one to the mapping unit 29. Specifically, the selection circuit 28 inserts the control information sequence into the main signal information sequence such that the control information sequence indicates a multilevel modulation scheme for an immediately following main signal information sequence, and outputs the main signal information sequence into which the control information sequence has been inserted.

The mapping unit 29 generates a multilevel modulation symbol sequence by performing mapping processing on the encoded sequence output by the selection circuit 28. At this time, the mapping unit 29 performs mapping processing on the control information sequence by using a predetermined multilevel modulation scheme, and performs mapping processing on the main signal information sequence by using the multilevel modulation scheme indicated by the control information. The mapping unit 29 preferably uses, for the control information sequence, a modulation scheme resistant to transmission noise, such as a binary phase shift keying (BPSK) modulation scheme or a quaternary PSK (QPSK) modulation scheme. Furthermore, when performing mapping processing on the main signal information sequence, the mapping unit 29 excludes a fixed bit row not to be transmitted, from the multilevel modulation symbol. The mapping unit 29 transmits an optical transmission signal including the multilevel modulation symbol sequence subjected to the mapping processing.

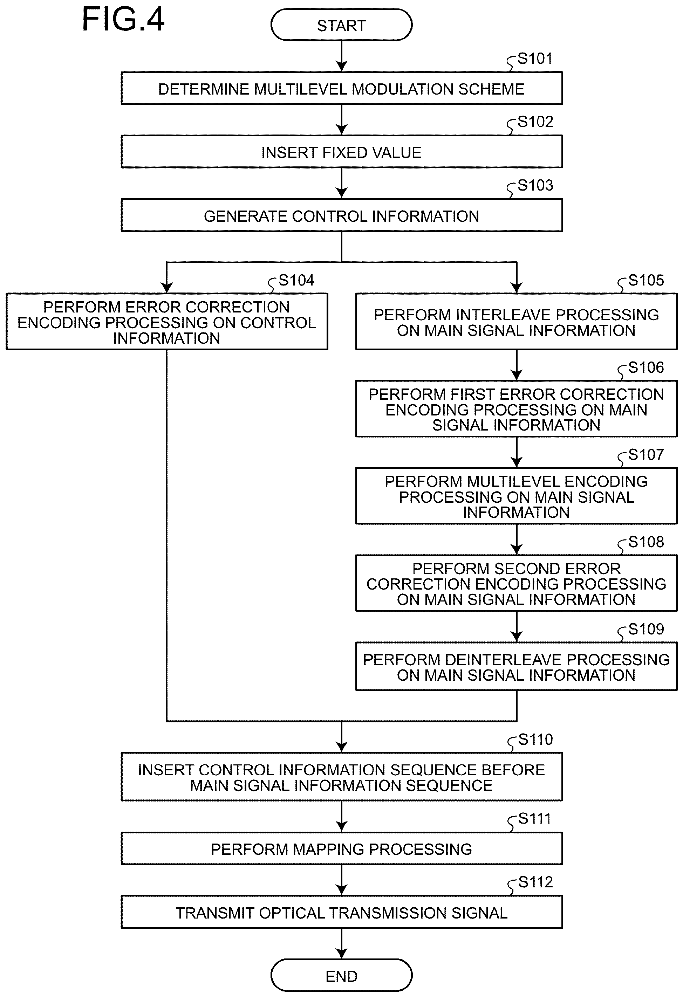

FIG. 4 is a flowchart for describing operation of the optical transmission apparatus 2 illustrated in FIG. 2. The modulation scheme determination unit 20 of the optical transmission apparatus 2 determines a multilevel modulation scheme to be used for a main signal information sequence on the basis of the length of an information bit sequence to be transmitted (step S101). The fixed value insertion unit 21 inserts a fixed value into the information bit sequence to be transmitted, according to the determined multilevel modulation scheme (step S102). The fixed value is preferably set to, for example, "0".

The control information generation unit 22 generates fixed-length control information including at least information indicating the multilevel modulation scheme determined by the modulation scheme determination unit 20 (step S103). The control information may further include frame information on a main signal.

Main signal information is input to the encoding circuit 23, following the input of the control information. The control encoding unit 27 of the encoding circuit 23 performs error correction encoding processing on the control information (step S104). Error correction encoding processing with high error correction capability is performed in the control encoding unit 27.

In addition, when the main signal information is input, the interleaver 24 performs interleave processing on the main signal information in parallel with the error correction encoding processing performed on the control information in step S104 (step S105). Subsequently, the HD-FEC encoding unit 251 of the main encoding unit 25 performs first error correction encoding processing on the main signal information output by the interleaver 24 (step S106). When the HD-FEC encoding unit 251 outputs the main signal information subjected to the first error correction encoding processing, the multilevel encoding unit 252 performs multilevel encoding processing on the main signal information (step S107). The multilevel encoding unit 252 outputs, to the SD-FEC encoding unit 253, bits to be processed by the SD-FEC encoding unit 253, and outputs remaining bits to the deinterleaver 26. The SD-FEC encoding unit 253 performs, on the input bits, second error correction encoding processing for the main signal information (step S108). The deinterleaver 26 performs deinterleave processing on the main signal information output by the multilevel encoding unit 252 and the SD-FEC encoding unit 253 (step S109).

Note that, here, the processing of step S104 and the processing of steps S105 to S109 are performed in parallel, but the processing of steps S105 to S109 may be performed subsequent to the processing of step S104.

The selection circuit 28 inserts a control information sequence before the main signal information sequence (step S110). At this time, the selection circuit 28 inserts the control information sequence before the main signal information sequence such that the inserted control information sequence indicates a multilevel modulation scheme to be used for an immediately following main signal information sequence. Specifically, main signal information on a target for which the multilevel modulation scheme indicated by the control information is used is input to the encoding circuit 23, following the input of the control information, and the main signal information and the control information are also input to the selection circuit 28 in the same order. After outputting a fixed-length control information sequence to the mapping unit 29, the selection circuit 28 outputs a main signal information sequence corresponding to the control information sequence to the mapping unit 29.

The mapping unit 29 performs mapping processing on the input encoded bit sequence (step S111). Specifically, the mapping unit 29 performs mapping processing on the control information sequence by using a predetermined multilevel modulation scheme. Furthermore, the mapping unit 29 performs mapping processing on the main signal information sequence by using the multilevel modulation scheme indicated by the control information. The mapping unit 29 transmits, as an optical transmission signal, a multilevel modulation symbol sequence subjected to the mapping processing to the optical reception apparatus 3 (step S112).

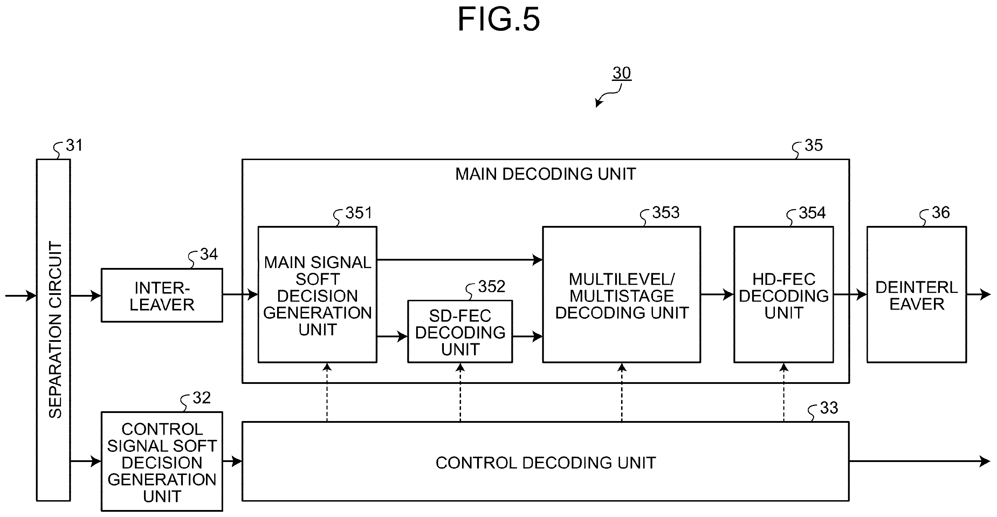

FIG. 5 is a diagram illustrating a configuration of a decoding circuit 30 included in the optical reception apparatus 3 illustrated in FIG. 1.

The decoding circuit 30 includes a separation circuit 31, a control signal soft decision generation unit 32, a control decoding unit 33, an interleaver 34, a main decoding unit 35, and a deinterleaver 36. Note that the optical reception apparatus 3 can include a demodulation circuit (not illustrated) in addition to the decoding circuit 30, and a demodulation symbol is input to the decoding circuit 30.

The separation circuit 31 separates an input demodulation symbol into a demodulation symbol of control information and a demodulation symbol of main signal information. The separation circuit 31 outputs the demodulation symbol of the control information to the control signal soft decision generation unit 32, and outputs the demodulation symbol of the main signal information to the interleaver 34.

The control signal soft decision generation unit 32 performs soft decision processing on the demodulation symbol of the control information according to a predetermined control signal modulation scheme, and generates soft decision information. The control signal soft decision generation unit 32 outputs the generated soft decision information to the control decoding unit 33.

The control decoding unit 33 performs error correction decoding processing on the soft decision information regarding the control information, and outputs a control signal. Furthermore, the control decoding unit 33 can hold control information included in the control signal and provide the control information to the main decoding unit 35.

The interleaver 34 performs interleave processing on the demodulation symbols of the main signal information, and rearranges the order of main signals in units of multilevel modulation symbols. The interleaver 34 outputs the interleaved main signal information sequence to the main decoding unit 35.

The main decoding unit 35 includes a main signal soft decision generation unit 351, an SD-FEC decoding unit 352, a multilevel/multistage decoding unit 353, and an HD-FEC decoding unit 354. The main decoding unit 35 performs decoding processing on the main signals according to the control information held by the control decoding unit 33.

The main signal soft decision generation unit 351 performs soft decision processing on the main signals, and generates soft decision information. The main signal soft decision generation unit 351 outputs the generated soft decision information to each of the SD-FEC decoding unit 352 and the multilevel/multistage decoding unit 353.

The SD-FEC decoding unit 352 performs, on some of the main signals, error correction decoding processing based on soft-decision decoding processing. The SD-FEC decoding unit 352 outputs the processed signals to the multilevel/multistage decoding unit 353. The decoding processing performed by the SD-FEC decoding unit 352 may be referred to as second error correction decoding processing.

The multilevel/multistage decoding unit 353 performs multilevel/multistage decoding processing by using a portion output by the main signal soft decision generation unit 351 and information output by the SD-FEC decoding unit 352. The portion output by the main signal soft decision generation unit 351 has not been SD-FEC decoded. The information output by the SD-FEC decoding unit 352 has been SD-FEC decoded. The multilevel/multistage decoding unit 353 outputs the processed signals to the HD-FEC decoding unit 354.

The HD-FEC decoding unit 354 performs hard-decision decoding processing on the main signals. The HD-FEC decoding unit 354 outputs the signals subjected to the hard-decision decoding processing to the deinterleaver 36. The error correction decoding processing to be performed by the HD-FEC decoding unit 354 may be referred to as first error correction decoding processing.

The deinterleaver 36 restores the order of the interleaved main signals to original order thereof in units of multilevel modulation symbols for hard decision.

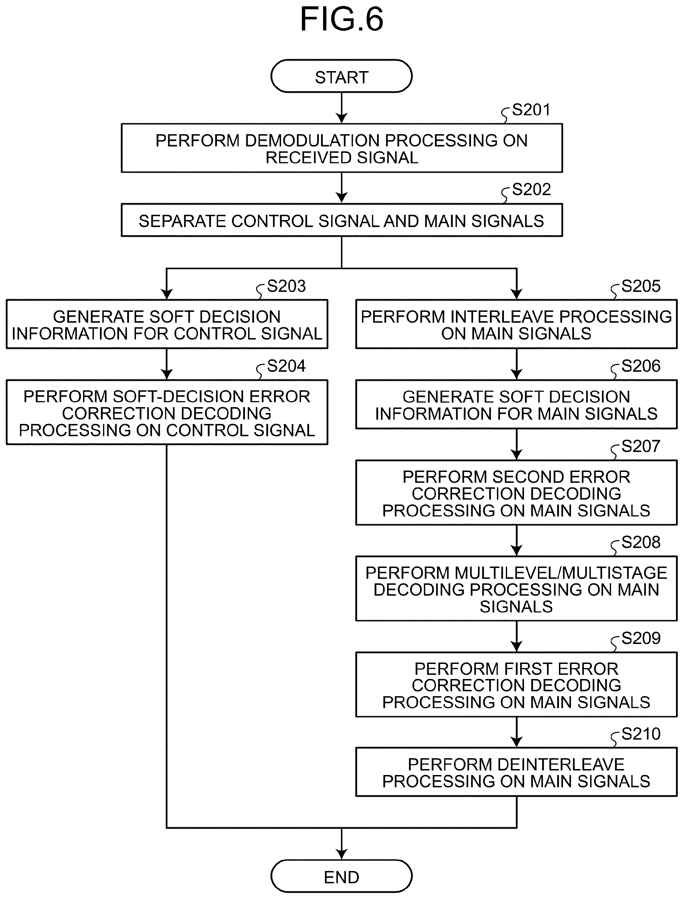

FIG. 6 is a flowchart for describing operation of the optical reception apparatus 3 illustrated in FIG. 1. The optical reception apparatus 3 performs demodulation processing on a multilevel-modulated optical transmission signal that is a received signal (step S201). Subsequently, the separation circuit 31 separates a control signal and main signals (step S202).

The control signal soft decision generation unit 32 generates soft decision information for the control signal (step S203). The control decoding unit 33 performs soft-decision error correction decoding processing on the control signal (step S204). Here, the control decoding unit 33 outputs the control signal, and holds control information included in the control signal.

In addition, the interleaver 34 performs interleave processing on the main signals (step S205). The interleave processing of the main signals can also be performed in parallel with, for example, the soft-decision error correction decoding processing performed on the control signal in step S204. The interleaver 34 outputs the interleaved signals to the main signal soft decision generation unit 351.

The main signal soft decision generation unit 351 generates soft decision information for the main signals on the basis of a multilevel modulation scheme included in the control information held in the control decoding unit 33 (step S206). A portion of the generated soft decision information, to be subjected to soft-decision decoding processing is output to the SD-FEC decoding unit 352, and a remaining portion of the generated soft decision information is output to the multilevel/multistage decoding unit 353.

The SD-FEC decoding unit 352 performs, on input main signals, soft-decision decoding processing which is the second error correction decoding processing (step S207). The SD-FEC decoding unit 352 outputs the processed main signals to the multilevel/multistage decoding unit 353.

The multilevel/multistage decoding unit 353 performs multilevel/multistage decoding processing on the input main signals (step S208). Specifically, on the basis of a result of SD-FEC decoding, the multilevel/multistage decoding unit 353 determines a hard-decision bit from a result of hard decision of a multilevel demodulation symbol on which SD-FEC decoding processing has not been performed, and outputs the determined hard-decision bit to the HD-FEC decoding unit 354 together with a multilevel demodulation symbol on which SD-FEC decoding processing has been performed.

The HD-FEC decoding unit 354 performs, on the main signals, hard-decision decoding processing that is the first error correction decoding processing (step S209). At this time, a modulation symbol bit not to be transmitted is input as a fixed bit "0" on the basis of information included in the decoded control signal. As a result, it is possible to lower the probability of an uncorrectable error by the effect of shortening an error correction code sequence without affecting error correction processing. The HD-FEC decoding unit 354 outputs an information bit sequence decoded by the hard-decision decoding processing to the deinterleaver 36.

The deinterleaver 36 performs deinterleave processing on the main signals (step S210). In the deinterleave processing, the order of the information bit sequence is restored to the original order in accordance with the rearrangement performed by the interleaver 34.

Here, hardware configurations of the optical transmission apparatus 2 and the optical reception apparatus 3 will be described. Functions of the optical transmission apparatus 2 and the optical reception apparatus 3 are implemented by processing circuitry. The processing circuitry may be implemented by dedicated hardware, or may be a control circuit using a central processing unit (CPU).

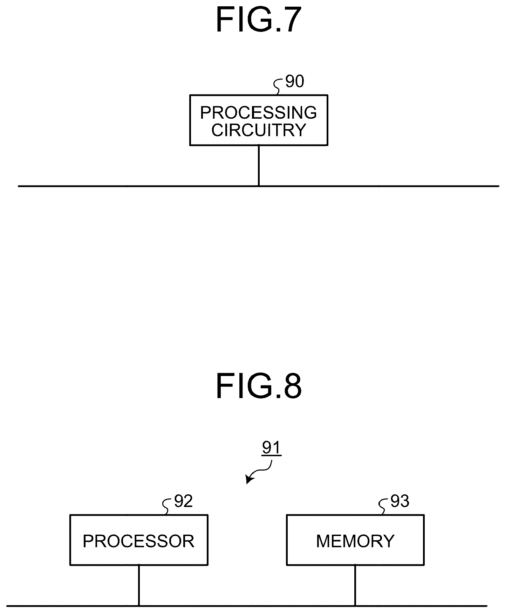

When implemented by dedicated hardware, the above-described processing circuitry is implemented by processing circuitry 90 illustrated in FIG. 7. FIG. 7 is a diagram illustrating dedicated hardware for implementing the functions of the optical transmission apparatus 2 and the optical reception apparatus 3 illustrated in FIG. 1. The processing circuitry 90 is a single circuit, a composite circuit, a programmed processor, a parallel-programmed processor, an application specific integrated circuit (ASIC), a field programmable gate array (FPGA), or a combination thereof.

In a case where the above-described processing circuitry is implemented by a control circuit using a CPU, this control circuit is, for example, a control circuit 91 with a configuration illustrated in FIG. 8. FIG. 8 is a diagram illustrating a configuration of the control circuit 91 for implementing the functions of the optical transmission apparatus 2 and the optical reception apparatus 3 illustrated in FIG. 1. As illustrated in FIG. 8, the control circuit 91 includes a processor 92 and a memory 93. The processor 92 is a CPU, and is also called an arithmetic device, a microprocessor, a microcomputer, a digital signal processor (DSP), or the like. Examples of the memory 93 include nonvolatile or volatile semiconductor memories such as a random access memory (RAM), a read only memory (ROM), a flash memory, an erasable programmable ROM (EPROM), and an electrically EPROM (EEPROM (registered trademark)), a magnetic disk, a flexible disk, an optical disk, a compact disk, a mini disk, and a digital versatile disk (DVD).

In a case where the above-described processing circuitry is implemented by the control circuit 91, the processing circuitry is implemented by the processor 92 reading and executing a program corresponding to processing to be performed by each constituent element, the program being stored in the memory 93. Furthermore, the memory 93 is also used as a temporary memory in each processing to be executed by the processor 92. Note that the program to be executed by the processor 92 may be provided by being stored in a storage medium, or may be provided via a communication path such as the Internet.

Note that a method for dividing the constituent elements illustrated in each of FIGS. 2, 3, and 5 is an example, and is not limited to the method exemplified in each of the drawings. In addition, each of the plurality of constituent elements illustrated in FIGS. 2, 3, and 5 may be implemented by different processing circuitry. Alternatively, the plurality of constituent elements illustrated in FIGS. 2, 3, and 5 may be collectively implemented by the same processing circuitry. In addition, the constituent elements illustrated in FIGS. 2, 3, and 5 can be separately implemented by multiple pieces of processing circuitry.

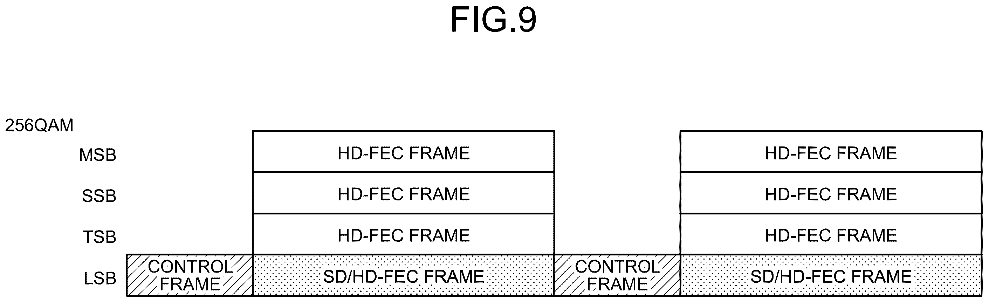

Next, a description will be given of a frame format to be used by the optical transmission system 1 for each multilevel modulation scheme. The optical transmission system 1 can encode a main signal information to be transmitted, by using a multilevel modulation scheme selected from among a plurality of multilevel modulation schemes such as 256QAM, 64QAM, 16QAM, and QPSK. FIG. 9 is a diagram illustrating a frame format of 256QAM. It is assumed that QPSK-modulated fixed-length transmission is performed for the control information, regardless of a modulation scheme to be used for the main signal information.

In the case of 256QAM, data are arranged for main signals as follows: data doubly encoded by SD-FEC and HD-FEC are arranged in some of LSBs which are least significant bits, and data encoded only by HD-FEC are arranged in portions other than the LSBs.

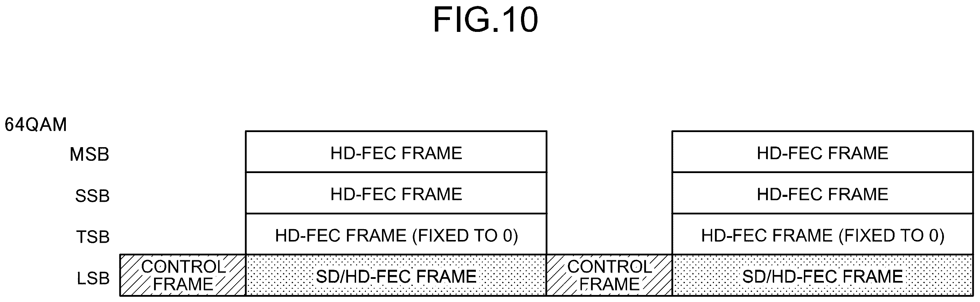

FIG. 10 is a diagram illustrating a frame format of 64QAM. In the case of 64QAM, error correction encoding processing is performed for main signals as follows: data doubly encoded by SD-FEC and HD-FEC are arranged in some of LSBs, data encoded only by HD-FEC are arranged in remaining LSBs and in most significant bits (MSBs) and second significant bits (SSBs) which are two of remaining three systems of MSBs, SSBs, and third significant bits (TSBs), and the remaining one system, that is, TSBs are fixed to 0. Note that, at the time of transmission, portions fixed to 0 are not transmitted.

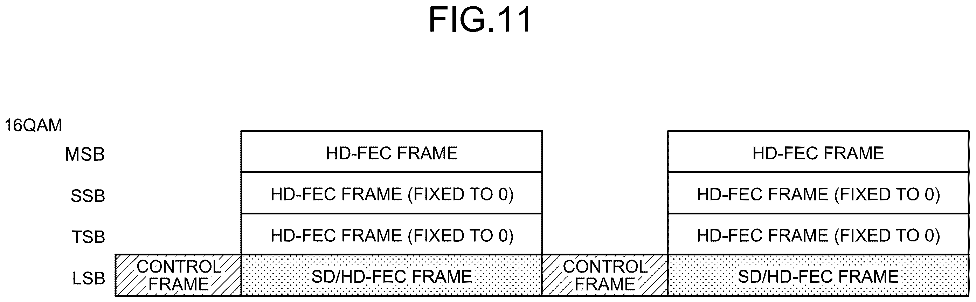

FIG. 11 is a diagram illustrating a frame format of 16QAM. In the case of 16QAM, error correction encoding processing is performed for main signals as follows: data doubly encoded by SD-FEC and HD-FEC are arranged in some of LSBs, data encoded only by HD-FEC are arranged in remaining LSBs and in MSBs, that is, one of the three systems other than the LSBs, and the remaining two systems, that is, SSBs and TSBs are fixed to 0. At the time of transmission, portions fixed to 0 are not transmitted.

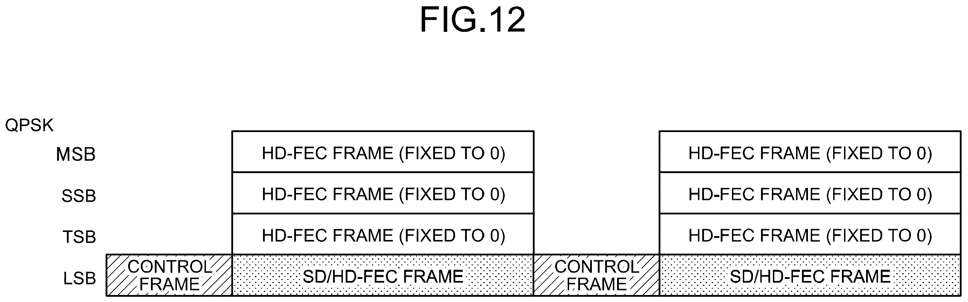

FIG. 12 is a diagram illustrating a frame format of QPSK. In the case of QPSK, error correction encoding processing is performed as follows: data doubly encoded by SD-FEC and HD-FEC are arranged in some of LSBs, data encoded only by HD-FEC are arranged in remaining LSBs, and MSBs, SSBs, and TSBs, which are the three systems other than the LSBs, are fixed to 0. At the time of transmission, portions fixed to 0 are not transmitted.

With the above configuration, the same encoding processing and decoding processing can be performed on the SD-FEC portion regardless of the modulation scheme, and the same encoding processing and decoding processing can also be performed on the HD-FEC portion except that a portion fixed to 0 is operated according to a modulation scheme set by a control signal. Therefore, circuit scale can be reduced.

As described above, the optical transmission apparatus 2 according to the first embodiment is the optical transmission apparatus 2 for transmitting a multilevel-modulated optical transmission signal, the optical transmission apparatus 2 including: the control encoding unit 27 that outputs a control information sequence having been encoded, by performing error correction encoding processing on control information, the control information including information on a multilevel modulation scheme to be used for a main signal information sequence; the main encoding unit 25 that generates the main signal information sequence having been encoded, by performing error correction encoding processing on main signal information, the error correction encoding processing corresponding to the multilevel modulation scheme indicated by the control information; the selection circuit 28 that outputs the main signal information sequence after inserting the control information sequence into the main signal information sequence such that the control information sequence indicates the multilevel modulation scheme to be used for the immediately following main signal information sequence; and the mapping unit 29 that generates the multilevel-modulated optical transmission signal by performing mapping processing on the control information sequence by use of a predetermined multilevel modulation scheme, the control information sequence having been output by the selection circuit 28, and performing mapping processing on the main signal information sequence by use of the multilevel modulation scheme indicated by the control information sequence, the main signal information sequence having been output by the selection circuit 28. With such a configuration, the optical transmission apparatus 2 can transmit control information including a multilevel modulation scheme to be used for a main signal information sequence to the optical reception apparatus 3 before transmitting the main signal information sequence to the optical reception apparatus 3. Therefore, the optical reception apparatus 3 can process received main signals on the basis of the control information, and can transmit the main signals by changing multilevel modulation schemes according to, for example, the length of an information bit sequence of the main signal information. In a case where a fixed multilevel modulation scheme is used, it is necessary to use a single code format for error correction according to the multilevel modulation scheme. Therefore, in a case where the length of the information bit sequence is shorter than a code length, measures such as inserting a fixed length into the information bit sequence are taken so as to be in conformity with the code format. Thus, there are cases where a large number of unnecessary fixed values need to be inserted depending on the length of the information bit sequence, leading to deterioration of transmission efficiency. Meanwhile, in the above configuration, the multilevel modulation scheme can be changed according to the information bit sequence to be transmitted. Thus, transmission efficiency can be improved.

In addition, the control encoding unit 27 preferably generates the control information sequence by using an error correction code having a higher error correction capability than an error correction code to be used for the main signal information by the main encoding unit 25. If there is an error in the control information, it is difficult for the optical reception apparatus 3 to correctly decode the main signal information on the basis of the control information. Thus, it is important to correctly transmit the control information. Therefore, it is preferable to use, for the control information, an error correction code having a higher error correction capability than an error correction code to be used for the main signal information.

Furthermore, the control encoding unit 27 preferably performs encoding processing of the control information by using an error correction code, such as a polar code, applicable to a short code length and capable of reducing a delay in encoding and decoding processing. As a result, the time required for encoding processing of the control information can be shortened. Therefore, even if encoding processing of the control information is performed in parallel with error correction encoding processing of the main signal information, the encoding processing of the control information can be completed before completion of the error correction encoding processing of the main signal information. Accordingly, the time required for transmission processing can be shortened as compared with the case where the error correction encoding processing of the main signal information is started after completion of the encoding processing of the control information.

The mapping unit 29 preferably performs mapping processing on the control information sequence by using a multilevel modulation scheme having a smaller multilevel degree than the multilevel modulation scheme to be used for the main signal information sequence. As a result, the control information can be more reliably transmitted to the optical reception apparatus 3.

Furthermore, a bit sequence to be subjected to error correction encoding processing by the main encoding unit 25 can be defined as a bit sequence corresponding to a maximum multilevel symbol of the multilevel modulation scheme to be used for the main signal information sequence, the bit sequence being obtained by insertion of fixed bits into an information bit sequence of the main signal information to be transmitted, the fixed bits being inserted as a bit sequence not to be transmitted.

Furthermore, the main encoding unit 25 can perform first error correction encoding processing on the main signal information sequence by using an error correction code premised on hard-decision decoding, and perform second error correction encoding processing on a bit by using an error correction code premised on soft-decision decoding, the bit being included in the main signal information sequence subjected to the first error correction encoding processing, the bit corresponding to, for example, a least significant bit of a multilevel modulation symbol. As a result, error correction encoding processing can be doubly performed on a bit having a higher error rate, so that the error rate can be reduced.

Furthermore, the control information may further include information indicating a length of the main signal information sequence. As a result, even in a case where a short information bit sequence and a long information bit sequence are mixed, the optical reception apparatus 3 can grasp the lengths of the information bit sequences in advance, so that processing to be performed in the optical reception apparatus 3 can be simplified.

In addition, the optical reception apparatus 3 receives a multilevel-modulated optical transmission signal transmitted by the optical transmission apparatus 2. The optical reception apparatus 3 includes: the control decoding unit 33 that extracts the control information from the optical transmission signal; and the main decoding unit 35 that performs error correction decoding processing on the main signal information sequence based on the control information extracted from the optical transmission signal, the main signal information sequence being included in the optical transmission signal.

Furthermore, in a case where the main encoding unit 25 of the optical transmission apparatus 2 performs the error correction encoding processing on a bit sequence corresponding to a maximum multilevel symbol of the multilevel modulation scheme to be used for the main signal information sequence, the bit sequence being obtained by insertion of fixed bits into an information bit sequence of the main signal information to be transmitted, the fixed bits being inserted as a bit sequence not to be transmitted, the main decoding unit 35 of the optical reception apparatus 3 performs the error correction decoding processing on the main signal information sequence after inserting a missing fixed bit into the main signal information sequence based on the control information, the main signal information sequence being included in the optical transmission signal.

Furthermore, in a case where the main encoding unit 25 of the optical transmission apparatus 2 performs first error correction encoding processing on the main signal information sequence by using an error correction code premised on hard-decision decoding, and performs second error correction encoding processing on a bit by using an error correction code premised on soft-decision decoding, the bit being included in the main signal information sequence subjected to the first error correction encoding processing, the bit corresponding to a least significant bit of a multilevel modulation symbol, the main decoding unit 35 of the optical reception apparatus 3 performs hard-decision decoding processing on the main signal information sequence after determining a hard-decision bit other than the least significant bit of the multilevel modulation symbol based on a result of soft-decision decoding of the least significant bit.

The optical transmission apparatus 2 may be included in the optical transmission system 1, together with the optical reception apparatus 3. In addition, it is also possible to provide an optical transmission method for transmitting a multilevel-modulated optical transmission signal. The optical transmission method includes: a step of causing the optical transmission apparatus 2 to generate a control information sequence having been encoded, by performing error correction encoding processing on control information, the control information including information on a multilevel modulation scheme to be used for a main signal information sequence; a step of causing the optical transmission apparatus 2 to generate the main signal information sequence having been encoded, by performing error correction encoding processing on main signal information, the error correction encoding processing corresponding to the multilevel modulation scheme indicated by the control information; a step of causing the optical transmission apparatus 2 to insert the control information sequence into the main signal information sequence such that the control information sequence indicates the multilevel modulation scheme for the immediately following main signal information sequence; a step of causing the optical transmission apparatus 2 to perform mapping processing on the control information sequence by using a predetermined multilevel modulation scheme; a step of causing the optical transmission apparatus 2 to perform mapping processing on the main signal information sequence by using the multilevel modulation scheme indicated by the control information sequence; and a step of causing the optical transmission apparatus 2 to transmit the control information before transmitting the main signal information, by transmitting the multilevel-modulated optical transmission signal generated by the mapping processing.

The configurations set forth in the above embodiment show examples, and it is possible to combine the configurations with another known technique or combine the embodiments with each other, and is also possible to partially omit or change the configurations without departing from the scope of the present disclosure.

Note that, although the optical transmission apparatus 2 having a transmission function and the optical reception apparatus 3 having a reception function have been described in the above embodiment, it is also possible to provide an optical transmission apparatus that has both the function of the optical transmission apparatus 2 and the function of the optical reception apparatus 3 and is capable of bidirectional communication.

### Reference Signs List

1 optical transmission system; 2 optical transmission apparatus; 3 optical reception apparatus; 20 modulation scheme determination unit; 21 fixed value insertion unit; 22 control information generation unit; 23 encoding circuit; 24, 34 interleaver; 25 main encoding unit; 26, 36 deinterleaver; 27 control encoding unit; 28 selection circuit; 29 mapping unit; 30 decoding circuit; 31 separation circuit; 32 control signal soft decision generation unit; 33 control decoding unit; 35 main decoding unit; 90 processing circuitry; 91 control circuit; 92 processor; 93 memory; 251 HD-FEC encoding unit; 252 multilevel encoding unit; 253 SD-FEC encoding unit; 351 main signal soft decision generation unit; 352 SD-FEC decoding unit; 353 multilevel/multistage decoding unit; 354 HD-FEC decoding unit.

## Claims

1. An optical transmission apparatus for transmitting a multilevel-modulated optical transmission signal, the optical transmission apparatus comprising:
a control encoding unit to output a control information sequence having been encoded, by performing error correction encoding processing on control information, the control information including information on a multilevel modulation scheme to be used for a main signal information sequence;
a main encoding unit to generate the main signal information sequence having been encoded, by performing error correction encoding processing on main signal information, the error correction encoding processing corresponding to the multilevel modulation scheme indicated by the control information;
a selection circuit to output the main signal information sequence after inserting the control information sequence into the main signal information sequence such that the control information sequence indicates the multilevel modulation scheme to be used for the immediately following main signal information sequence; and
a mapping unit to generate the multilevel-modulated optical transmission signal by performing mapping processing on the control information sequence by use of a predetermined multilevel modulation scheme, the control information sequence having been output by the selection circuit, and performing mapping processing on the main signal information sequence by use of the multilevel modulation scheme indicated by the control information sequence, the main signal information sequence having been output by the selection circuit.

2. The optical transmission apparatus according to claim 1, wherein
the control encoding unit generates the control information sequence by using an error correction code having a higher error correction capability than an error correction code to be used for the main signal information by the main encoding unit.

3. The optical transmission apparatus according to claim 1, wherein
the control encoding unit performs error correction encoding processing on the control information sequence in parallel with error correction encoding processing being performed by the main encoding unit.

4. The optical transmission apparatus according to claim 3, wherein
the control encoding unit performs the error correction encoding processing on the control information sequence by using a Polar code.

5. The optical transmission apparatus according to claim 1, wherein
the mapping unit performs the mapping processing on the control information sequence by using a multilevel modulation scheme having a smaller multilevel degree than the multilevel modulation scheme to be used for the main signal information sequence.

6. The optical transmission apparatus according to claim 1, wherein
the main encoding unit performs the error correction encoding processing on a bit sequence corresponding to a maximum multilevel symbol of the multilevel modulation scheme to be used for the main signal information sequence, the bit sequence being obtained by insertion of fixed bits into an information bit sequence of the main signal information to be transmitted, the fixed bits being inserted as a bit sequence not to be transmitted.

7. The optical transmission apparatus according to claim 1, wherein
the main encoding unit performs first error correction encoding processing on the main signal information sequence by using an error correction code premised on hard-decision decoding, and performs second error correction encoding processing on a bit by using an error correction code premised on soft-decision decoding, the bit being included in the main signal information sequence subjected to the first error correction encoding processing, the bit corresponding to a least significant bit of a multilevel modulation symbol.

8. The optical transmission apparatus according to claim 1, wherein
the control information further includes information indicating a length of the main signal information sequence.

9. An optical reception apparatus for receiving the optical transmission signal transmitted by the optical transmission apparatus according to any one of claims 1 to 8, the optical reception apparatus comprising:
a control decoding unit to extract the control information from the optical transmission signal; and
a main decoding unit to perform error correction decoding processing on the main signal information sequence based on the control information extracted from the optical transmission signal, the main signal information sequence being included in the optical transmission signal.

10. An optical reception apparatus for receiving the optical transmission signal transmitted by the optical transmission apparatus according to claim 6, the optical reception apparatus comprising:
a control decoding unit to extract the control information from the optical transmission signal; and
a main decoding unit to perform error correction decoding processing on the main signal information sequence based on the control information extracted from the optical transmission signal, the main signal information sequence being included in the optical transmission signal, wherein
the main decoding unit performs the error correction decoding processing on the main signal information sequence after inserting a missing fixed bit into the main signal information sequence based on the control information, the main signal information sequence being included in the optical transmission signal.

11. An optical reception apparatus for receiving the optical transmission signal transmitted by the optical transmission apparatus according to claim 7, the optical reception apparatus comprising:
a control decoding unit to extract the control information from the optical transmission signal; and
a main decoding unit to perform error correction decoding processing on the main signal information sequence based on the control information extracted from the optical transmission signal, the main signal information sequence being included in the optical transmission signal, wherein
the main decoding unit performs hard-decision decoding processing on the main signal information sequence after determining a hard-decision bit other than the least significant bit of the multilevel modulation symbol based on a result of soft-decision decoding of the least significant bit.

12. An optical transmission system comprising:
the optical transmission apparatus according to claim 1; and
the optical reception apparatus according to claim 9.

13. An optical transmission method for transmitting a multilevel-modulated optical transmission signal, the optical transmission method comprising:
a step of causing an optical transmission apparatus to generate a control information sequence having been encoded, by performing error correction encoding processing on control information, the control information including information on a multilevel modulation scheme to be used for a main signal information sequence;
a step of causing the optical transmission apparatus to generate the main signal information sequence having been encoded, by performing error correction encoding processing on main signal information, the error correction encoding processing corresponding to the multilevel modulation scheme indicated by the control information;
a step of causing the optical transmission apparatus to insert the control information sequence into the main signal information sequence such that the control information sequence indicates the multilevel modulation scheme for the immediately following main signal information sequence;
a step of causing the optical transmission apparatus to perform mapping processing on the control information sequence by using a predetermined multilevel modulation scheme;
a step of causing the optical transmission apparatus to perform mapping processing on the main signal information sequence by using the multilevel modulation scheme indicated by the control information sequence; and
a step of causing the optical transmission apparatus to transmit the control information before transmitting the main signal information, by transmitting the multilevel-modulated optical transmission signal generated by the mapping processing.
